# EUROPEAN PATENT APPLICATION

(11) **EP 4 844 687 A1**
(43) Date of publication of application: **25.11.2026**
(21) Application number: 26179118.0
(22) Date of filing: 18.05.2026
(51) Int. Cl.: G06T 11/00, G06N 3/0475

(54) **MULTIMODAL FRAMEWORK FOR CONTEXT AWARE IMAGE GENERATION**

(30) Priority: 19.05.2025 US 202563808611 P; 26.02.2026 US 202619551277
(71) Applicant: Apple Inc., Cupertino, CA 95014 (US)
(72) Inventor: SANTOS, Ron C., Cupertino, 95014 (US); MOHA, Alexandre R., Cupertino, 95014 (US); GUERA COBO, David, Cupertino, 95014 (US); PAUL, Grant R., Cupertino, 95014 (US); VAN BASTELAER, Max-Olivier C., Cupertino, 95014 (US); MANYAM, Ohil K., Cupertino, 95014 (US); STEWART, Sean C., Cupertino, 95014 (US); REN, Zhile, Cupertino, 95014 (US); BOARD, Elizabeth J., Cupertino, 95014 (US)
(74) Representative: COPA Copenhagen Patents

(57) **Abstract**

Systems and methods provide for generating an image using a machine learning model. An application provides one or more images and an input text describing an output image. The one or more images and the text is used to generate a query which is then processed using a machine learning model to generate the image. The generated image is then provided to the application for display. The methods further provide for generating a set of images depicting an entity and having a set of modifiable attributes. In response to receiving an indication for modifying one or more modifiable attributes, another set of images can be generated depicting the same entity but having the one or more modified set of attributes.

## Description

### CROSS-REFERENCE TO RELATED APPLICATIONS

The present application claims the benefit of U.S. Provisional Application No. 63/808,611, entitled "MULTIMODAL FRAMEWORK FOR CONTEXT AWARE IMAGE GENERATION", filed May 19, 2025, which is incorporated herein for reference in its entirety.

### TECHNICAL FIELD

This disclosure relates to generative models, and more specifically to using generative models for generating multimedia elements.

### BACKGROUND

In modem communication, especially in digital formats like texting, social media, images like emojis, stickers, and avatars have become an integral tool for expressing emotions, ideas, places, events, and more. These visual symbols help convey messages more effectively and often add a layer of emotional expression that words alone might not fully capture.

### BRIEF DESCRIPTION OF THE DRAWINGS

Certain features of the subject technology are set forth in the appended claims. However, for the purpose of explanation, several aspects of the subject technology are set forth in the following figures.
FIG. 1 illustrates an example network environment according to aspects of the subject technology.
FIG. 2 illustrates an example computing architecture for a system according to aspects of the subject technology.
FIG. 3 illustrates an example user interface for generating an image using a machine learning model.
FIG. 4 illustrates an example user interface for modifying attributes of an entity depicted in an image.
FIG. 5 illustrates a flowchart of an example process of generating an image using a machine learning model.
FIG. 6 illustrates a flowchart of an example process of modifying attributes of an entity depicted in an image.
FIG. 7 illustrates an example electronic system with which aspects of the subject technology may be implemented in accordance with one or more implementations.

The details above in the Brief Description of the Drawings are intended to describe only some aspects relating to certain embodiments of the innovations herein and should not be deemed in any way limiting with respect to requiring or omitting any aspect for embodiments to be claimed or otherwise limiting the disclosure or embodiments keeping with its scope or spirit.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In some implementations, structures and components are shown in block diagram form to avoid obscuring the concepts of the subject technology.

Including images like emojis, and stickers in messages and social media posts is an effective way for enhancing communication in digital environments. These images allow users to express emotions and thoughts. For example, emojis and stickers can convey a range of feelings from joy to sarcasm providing clarity which might not be possible with text only messages. Visual content such as images and videos typically attract more attention and engagement than text only content. This is because visual content may be more likely to be shared and commented on which is particularly beneficial in social media settings. Adding images like emojis, and stickers can also help users with difficulties in reading or language barriers as these images may provide a visual guide to help understand the context of the messages.

The use of images like emojis, and stickers on user devices may involve various constraints that may impact user experience. For example, the range of multimedia items may be narrow and only a few may be used frequently while others may remain underutilized. Additionally, keyboard settings may lack contextual awareness, e.g., they may not analyze the content of ongoing conversations or consider previous messages to suggest or create relevant multimedia items. In the subject system, generative models can be used for generating images that are more personalized and context aware through techniques such as generative adversarial networks (GANS) or variational auto encoders (VAE). Users can input a contextual description in the form of text or images, and the model can generate an output image that fits the description. Over time these models learn individual user preferences and styles adjusting the generated images accordingly. In the subject system, the user of a user device, or an automated agent acting on behalf of the user, can provide text or images as input to the generative model. In response, the generative model can process the input to generate an output image.

The subject system allows for the generation of output images depicting one or more entities (e.g., human, animal, objects, etc.,) and further enables the modification of attributes associated with entities depicted in the image, thereby allowing the user to generate new images that reflect the user's personalized preferences. By selecting specific attributes such as facial expressions, hairstyles, clothing or accessories, the user can iteratively update the visual representation of the entity. The functionality supports dynamic user driven image generation that enables the creation of customized and contextually relevant images, thereby enhancing personalization and improving overall user experience.

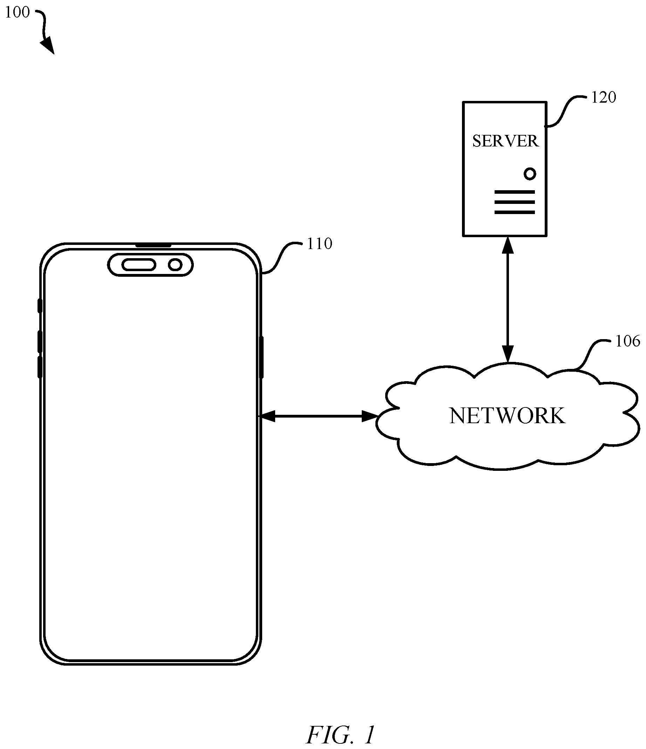

FIG. 1 illustrates an example network environment 100 in accordance with one or more implementations of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes a user device 110 (also referred herein to as an electronic device), and a server 120. The network 106 may communicatively (directly or indirectly) couple the user device 110 and/or the server 120. In one or more implementations, the network 106 may be an interconnected network of devices that may include, or may be communicatively coupled to, the Internet. For explanatory purposes, the network environment 100 is illustrated in FIG. 1 as including the user device 110, and the server 120; however, the network environment 100 may include any number of electronic devices and any number of servers.

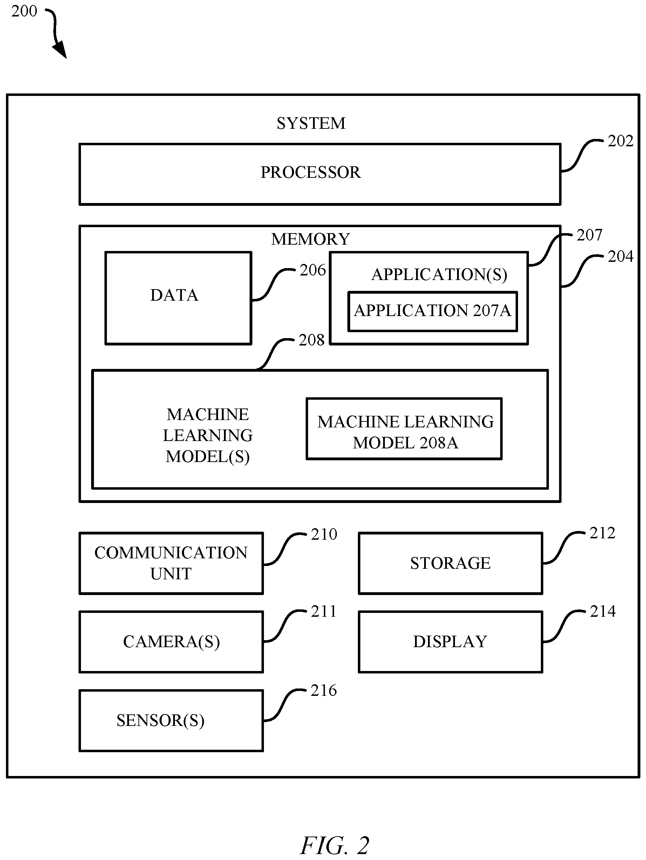

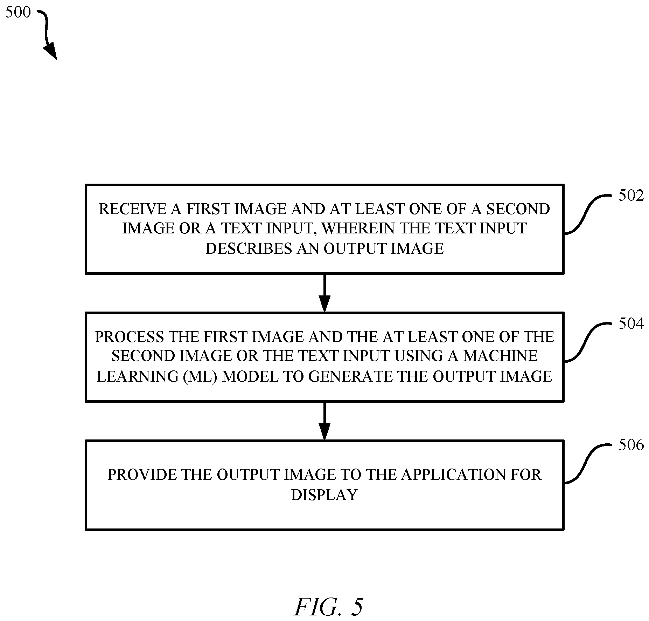

The user device 110 may be, for example, a desktop computer, a portable computing device such as a laptop computer, a smartphone, a peripheral device (e.g., a digital camera, headphones), a tablet device, a wearable device such as a watch, a band, and the like. In FIG. 1, by way of example, the user device 110 is depicted as a smartphone. The user device 110 may be, and/or may include all or part of, the systems discussed below with respect to FIG. 2 and/or FIG. 5.

In some implementations, the user device 110 may provide a system for training a machine learning model using training data, where the trained machine learning model is subsequently deployed locally at the user device 110. Further, the user device 110 may provide one or more frameworks for training machine learning models and/or developing applications using the machine learning models. In an example, the user device 110 may be an electronic device (e.g., a smartphone, a tablet device, a laptop computer, a desktop computer, a wearable electronic device, etc.) that can be used to communicate with entities like friends, family, colleagues.

In some implementations, a server 120 may provide a platform to train one or more machine learning models for deployment to the user device 110. The machine learning models deployed on the user device 110 may then perform one or more machine learning tasks. In some implementations, the server 120 may provide a cloud service that utilizes the trained machine learning model and is continually refined over time. The server 120 may be, and/or may include all or part of, the systems discussed below with respect to FIG. 2 and/or with respect to FIG. 5.

FIG. 2 illustrates an example system 200 in accordance with some implementations of the subject technology. In an example, the system 200 may be implemented in the user device 110 or the server 120. In another example, the system 200 may be implemented either in a single device or in a distributed manner in a plurality of devices, the implementation of which would be apparent to a person skilled in the art.

In an example, the system 200 may include a processor 202, memory 204 (memory device) and a communication unit 210. The memory 204 may store data 206 and one or more machine learning models 208A. In an example, the system 200 may include or may be communicatively coupled with a storage 212. Thus, the storage 212 may be either an internal storage or an external storage. In the example of FIG. 2, the system 200 includes one or more camera(s) 211, a display 214, and one or more sensors(s) 216. Sensor(s) 216 may include location sensors (e.g., satellite positioning system sensors), motion sensors (e.g., inertial sensors), and/or depth sensors (e.g., stereo cameras, LIDAR sensors, radar sensors, time-of-flight sensors, or the like).

In an example, the system 200 may execute a system process or service that performs core and/or auxiliary functions within the system 200. The system process may perform operations such as sensor data acquisition, real-time processing of inputs from camera(s) or sensor(s) 216, machine learning inferences, communication handling and user interface rendering. The system process is typically managed by an operating system (OS) of the system 200 and is different from one or more applications 207 executing in the system 200. In one or more implementations, the system process may interact with the one or more applications 207 using an application programming interface (API). In one or more implementations, the system process may be an operating system process or daemon.

In an example, the processor 202 may be a single processing unit or multiple processing units. The processor 202 may be implemented as one or more microprocessors, microcomputers, microcontrollers, digital signal processors, central processing units (CPUs), graphics processing units (GPUs), neural processors, specialized processors, e.g., for training and/or evaluating machine learning models, such as large language models, state machines, logic circuitries, and/or any devices that manipulate signals based on operational instructions. Among other capabilities, the processor 202 is configured to fetch and execute computer-readable instructions and data stored in the memory 204.

In an example, the communication unit 210 may include one or more hardware units that support wired or wireless communication between the processor 202 and processors of other computing devices, and/or for communication over a telecommunication network.

The memory 204 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 may include one or more applications 207 that are currently being executed on the system 200. The one or more applications 207 can interact with each other or with the operating system of the system 200 using application programming interfaces (API) to send or receive data. The one or more applications 207 can also include respective user interfaces (UI) to facilitate user-interaction, enabling the user to provide inputs and receive output seamlessly. For example, the one or more applications 207 can include an application 207A such as a creative application to generate or modify images (e.g., emojis, avatars, etc.,) for messaging applications and social media applications.

The data 206 may represent, amongst other things, a repository of data processed, received, and generated by one or more processors such as the processor 202. One or more of the aforementioned components of the system 200 may send or receive data, for example, using one or more input/output ports and one or more communication units.

The machine learning (ML) models 208, in an example, may include one or more of machine learning models such as a ML model 208A that is used to generate multimedia elements for use in messages or social media posts. Even though the following description is with reference to generating an image, the techniques and methods are applicable for any form of multimedia elements such as GIFs, videos, emojis, stickers, etc. In some embodiments, the ML model 208A can be supervised, semi-supervised, or unsupervised. The ML model 208A may be based on regression learning, reinforcement learning, decision trees, random forest, support vector machines, neural-networks, a diffusion based synthesis model or any suitable learning algorithms. As an example, and not by way of limitation, the neural-network based models may comprise one or more of transformers neural-networks, long-short term memory units, or recurrent neural networks, or any combination thereof.

In some implementations, the ML model 208A is a neural network designed using a transformer architecture and trained to generate images based on inputs such as textual descriptions or one or more input images. For example, if the input to the ML model 208A includes two images, the first image depicting a human and a second image depicting a forest, the ML model 208A can generate an image depicting a human riding a bicycle in a forest. The ML model 208A is trained on a large data set consisting of images, textual descriptions, and/or voice recordings. These descriptions may include simple labels, tags or detailed captions explaining the scene or content of the image. The ML model 208A may use separate embeddings for text and image inputs. The text is typically tokenized and embedded into a vector space while the images can be processed into patches (small grid like portions) and embedded similarly. The transformer structure of the ML model 208A may include multiple layers of self-attention mechanism that allow the model to weigh different parts of the input text and image patches during the training process.

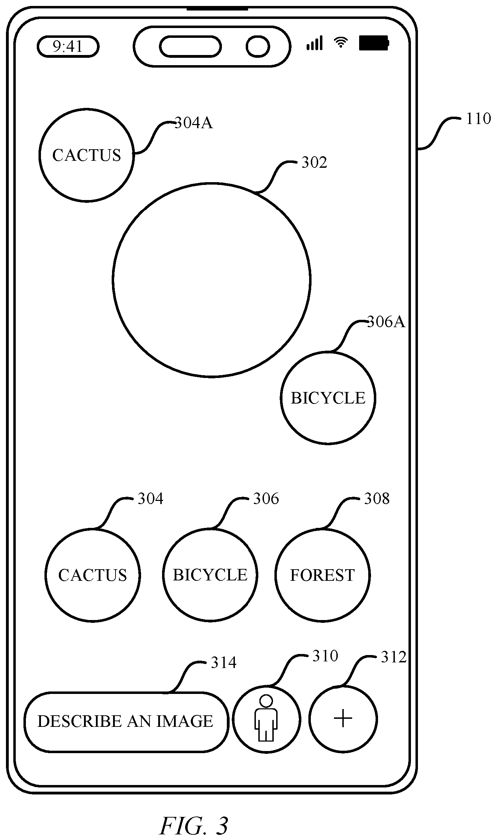

FIG. 3 is an example of a graphical user interface (UI) provided by the application 207A for generating an output image. The UI of the application 207A is configured to allow users to select various types of inputs for generating an output image 302 through interaction with selectable UI elements of the UI. In one or more implementations, these UI elements (e.g., UI elements 304, 306 and 308) may each correspond to predefined images (e.g., emojis, avatars, etc.) In this example, the UI elements 304, 306 and 308 can be associated with a first image depicting a "cactus", a second image depicting a "bicycle" and a third image depicting a "forest", respectively. When a user selects one or more of these UI elements (e.g., UI elements 304 and 306), the images corresponding to the UI elements are identified as input sources, and the selection is reflected visually by the UI elements 304A and 306B. The application 207A can pass the selected images to the system process, which then generates the desired output image 302 (e.g., an image depicting a cactus riding a bicycle) by processing the selected images using the ML model 208A. To further enhance personalization, the UI may also provide UI elements for selecting additional input images such as images of individuals retrieved from the device's contacts application (e.g., UI element 310) or images that are locally stored in the device's image gallery (e.g., UI element 312). Moreover, the UI may include a text input field (e.g., UI element 314) which allows the user to enter text describing the output image 302, which can be used as an additional parameter by the ML model to generate the output image 302.

In response to receiving the input (e.g., the first image, the second image, and/or the text), the system process can generate the output image 302 by processing the input using the ML model 208A. In some embodiments, the system process can generate a down sampled version of the first image by processing the first image using an image processing model. The image processing model may implement down sampling algorithms (e.g., average pooling, strided convolution, bicubic interpolation, or learned down sampling via deep neural networks, etc.,) to reduce the spatial dimensions (e.g., height and width) of the first image by a predetermined factor. The resulting down sampled image can retain the structure and visual characteristics of the original image but with a reduced resolution. Additionally, the image processing model can include configurable parameters to control the aspects of the down sampling process, such as preserving aspect ratio, applying anti-aliasing, or integrating postprocessing filters to enhance visual clarity. Similarly, the system process can process the second image using the image processing model to generate a down sampled version of the second image.

In some embodiments, the system process can further process the down sampled version of the first image using an image encoder model to extract visual and contextual features associated with the down sampled version of the first image. In some embodiments, the image encoder model can be a neural network based architecture that receives the down sampled version of the first image as input and generates a corresponding output in the form of a feature vector - referred to as a first feature vector. The image encoder model may consist of multiple processing layers, such as convolutional layers, pooling layers, normalization layers, non-linear activation functions, etc. These layers can process the down sampled version of the first image into a compressed representation that retains the visual and contextual features of the down sampled version of the first image. The visual features extracted by the image encoder model can encode information such as color distributions, edge contours, shapes, and textures present in the down sampled version of the first image. The contextual features can include high level semantic information inferred from the arrangement of visual elements present in the down sampled version of the first image, such as the presence of recognizable objects, spatial relationships between the objects, and scene level attributes (e.g., natural environment, urban setting.) Similarly, the system process can generate a second feature vector by encoding the visual and contextual features associated with the down sampled version of the second image.

In some embodiments, the system process can generate a third feature vector by processing the input text using a text encoder model which encodes one or more features associated with the semantic context of the text. The text encoder model can be implemented using architectures such as recurrent neural networks (RNNs), transformers or other language modelling techniques to encode features such as tone, descriptive elements, and contextual associations present in the text. In some embodiments, the input text can be tokenized and embedded into numerical representations, which can then be passed through successive layers of the text encoder model to generate the third feature vector.

In some embodiments, the system process can generate a query using all or a combination of the first feature vector, the second feature vector, and the third feature vector according to a predefined query template. In some embodiments, the query template can define the structural layout and an encoding format for combining the first feature vector, the second feature vector and the third feature vector into a single composite query. The query template can specify the positional arrangements, relative weighting, or transformation methods for embedding each feature vector into the query template. The system process can embed the first feature vector, the second feature vector, and the third feature vector into the query template to generate a structured query representing information associated with the first input image, the second input image, and the input text provided by the user.

In some embodiments, the system process can process the first image (or the down sampled version of the first image) using an image captioning model to generate a corresponding textual description that characterizes the visual content of the first image. In some embodiments, the image captioning model can include a visual encoder, and the language decoder configured to process an input image to generate a corresponding textual description. The visual encoder can include a convolutional neural network (CNN), a vision transformer, or similar feature extraction model, which can process the first image (or the down sampled version thereof) to generate a set of features representing the visual and contextual characteristics of the first image. The set of features can be further processed using the language decoder which may include a recurrent neural network (RNN), a long-short term memory (LSTM) network, or a transformer based model configured to generate a sequence of textual tokens that form a natural language description of the contents of the first image. In some embodiments, the image captioning model can further include an attention mechanism to selectively weigh regions of the first input image during each decoding step to enable the generation of contextually relevant and semantically accurate captions. For example, if the first image depicts a cactus in a desert, the image captioning model can process the first image to generate a textual description such as "a green cactus with two branches in a desert."

After generating the textual description for the first image, the system process can generate a fourth feature vector that encodes the semantic context by processing the generated textual description. Simultaneously, the system process can generate a corresponding textual description that characterizes the visual content of the second image by process the second image (or the down sampled version of the second image) using the image captioning model. The system process can further process the generated textual description associated with the second image using the text encoder to generate a fifth feature vector encoding the semantic context of the textual description.

In some embodiments, the system process can generate the query using all or a combination of the first feature vector, the second feature vector, the third feature vector, the fourth feature vector and the fifth vector. For example, the system process can embed the first feature vector, the second feature vector, the third feature, the fourth feature vector and the fifth vector into the query template to generate a structured query thereby encoding information associated with the first input image, the second input image, and the input text to the structured query.

In some embodiments, the system process can query a database associated with the data 206 of the system 200 to retrieve one or more labels associated with the first image and the second image. The labels can include names, metadata or descriptive annotations associated with the first image and the second image and stored in the database. These labels can also include automatically generated or user defined tags that describe the visual characteristics of the first image and the second image (e.g., "red car") and contextual attributes (e.g., "outdoor," "vacation," "evening.") After retrieving the one or more labels associated with the first image, the system process can generate a sixth feature vector by processing the one or more labels using the text encoder thereby encoding the textual or contextual features indicated by the one or more labels. Similarly, the system process can retrieve one or more labels associated with the second image and process the one or more labels using the text encoder to generate a seventh feature vector representing one or more textual or contextual features indicated by the one or more labels associated with the second image.

In some embodiments, the system process can generate the query using all or a combination of the feature vectors described above. For example, the system process can embed all or a combination of the feature vectors into the query template to generate a structured query representing information associated with the first input image, the second input image, and the input text.

In some embodiments, the ML model 208A is configured to receive and process structured query generated using a combination of feature vectors - such as those derived from the images, text inputs, image captions, metadata, and/or associated labels. Upon receiving the structured query, the ML model 208A can process the feature vectors from the structured query to generate an output image 302 which reflects a combination of the visual and contextual features depicted in the first input image, the second input image and the input text. The system process can execute the structured query through a series of attention layers, feed forward transformations, and learned mappings to generate a multi-dimensional image tensor representing the output image 302.

In some embodiments, the multidimensional tensor generated by the ML model 208 is post processed to generate the final output image suitable for display on the user device 110. The multi-dimensional tensor can be a three-dimensional array with dimensions corresponding to the height, width, and color-channels represent the pixel level content of the generated image. In some embodiments, the system process can apply one or more decoding and transformation operations to convert the multi-dimensional tensor into an image which can be displayed. These operations may include, but are not limited to scaling or normalizing pixel values to a standard display range, converting color formats and applying post processing filters such as denoising, sharpening, or antialiasing to enhance visual quality. Once the multi-dimensional tensor is converted into a standard image format (e.g., JPEG, PNG, or raw bitmap), the system process can transmit the output image 302 to the application 207A for rendering and displaying the image using the UI. The output image may be displayed within the display region of the UI (e.g., as output image 302) allowing the user to view, save or further interact with the output image 302.

In some embodiments, the system process can train the ML model 208A using a training data set that includes multiple training samples. Each training sample can include one or more training images, corresponding contextual descriptions characterizing the visual and contextual content of the training images, textual descriptions describing a target image and the associated target image which represents the expected output of the ML model 208A. During each training iteration, the training images and the textual descriptions are encoded into feature representations using the respective image and text encoders. These encoded features are then embedded into a query structure and passed through the ML model 208A which attempts to generate an output image. The generated image is compared to the target image using a loss function (e.g., pixel wise loss, perceptual loss, or adversarial loss) depending on the architecture of the ML model 208A. During each iteration of the training process, the training parameters of the ML model 208A is iteratively updated using optimization algorithms such as stochastic gradient descent (SGD) or Adam to minimize the loss and improve the fidelity of the generated images.

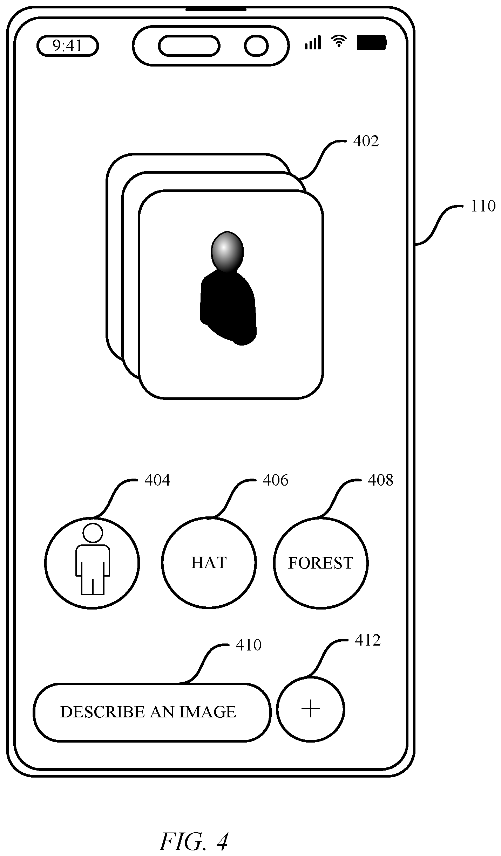

In some embodiments, the techniques and methods described above can be used to generate multiple images of entities (e.g., humans, animals, etc.) or objects (e.g., cars, furniture, etc.) and to modify one or more attributes associated with those entities. For example, the UI of the application 207A can be used to provide one or more input images depicting an entity along with the text input describing one or more desired attributes of that entity. In an example, the user may select an image depicting themselves and provide a textual description of a facial expression (e.g., angry, happy, smiling, etc.,) or a facial attribute (e.g., eyewear, headgear, clothing, etc.) In response, the application 207A can pass the selected image and the textual description to the system process. In response, the system process can use the ML model 208A to generate a first set of images depicting the user with the facial expression (or facial attribute) described by the input text. The application 207 can then display the first set of images generated by the system process. The user can review the generated images and select a preferred image for further customization. The UI may then present a set of modifiable attributes (e.g., hairstyle, clothing, eyewear, headgear, background, facial expressions, facial hair, etc.) and upon selection, the application 207A can request the system 200 for modifying the selected attributes. The system process can then generate a second set of images depicting the user with the selected modifiable attributes. The techniques and methods are further described with reference to FIG. 4.

FIG. 4 is an example of a graphical user interface (UI) provided by the application 207A of the user device 110 for generating an image depicting an entity and modifying one or more attributes associated with the entity. The UI of the application 207A is configured to allow the users to select various types of inputs for generating a first set of images 402 through interaction with selectable UI elements. These UI elements - such as UI elements 404, 406 and 408 may each correspond to predefined images (e.g., images of the user, emojis, avatar, etc.) In this example, the UI elements 404, 406 and 408 can be associated with a first image depicting the user, a second image depicting a hat and a third image depicting a forest, respectively. When the user selects a UI element (e.g., the UI element 404), the corresponding image depicting an entity is identified as the input. The UI may also provide UI elements for selecting additional input images such as images locally stored in the device's photo gallery (e.g., via UI element 412). In some embodiments, the UI may also include a text input field (e.g., UI element 410) that allows the user to enter text describing the one or more attributes associated with the entity, which can be used as an additional parameter by the ML model to generate the output image 402. In response to receiving the inputs, the application 207A can pass the selected inputs to the system process. The system process of the user device 110 can use the selected inputs to generate the first set of images 402.

In some embodiments, the system process can extract visual and contextual features by processing the input image using the image encoder model. As described above, the image encoder can be a neural network based architecture that can process the input image to generate a first feature vector to represent the visual and contextual features of the input image. The visual features extracted by the image encoder model can include information such as color distributions, edge contours, shapes, and textures present in the input image. The contextual features can include high level semantic information inferred from the arrangement of visual elements present in the input image, such as the presence of recognizable objects other than the entity, spatial relationships between one or more entities and objects present in the input image, and scene level attributes (e.g., natural environment, urban setting.) In some embodiments, rather than processing the input image using the image encoder model, the system process can generate a down-sampled version of the input image. For example, the system process can use the image processing model to generate a down sampled version of the input image. In such embodiments, the system process can process the down sampled version of the input image using the image encoder model to generate the first feature vector associated with the input image.

In some embodiments, the image encoder model is a facial recognition model configured to generate a feature vector to represent the visual and contextual features of the input image. The facial recognition model may be trained to identify and encode distinct facial characteristics, including geometric structures, key facial landmarks, skin tone, and expressions of the entity depicted in the input image while also capturing contextual information such as background elements and spatial relationships of the entity with background elements within the image.

In some embodiments, the system process can generate a second feature vector that encodes one or more features associated with the semantic context of the text. As described above, the text encoder model can be implemented using architectures such as recurrent neural networks (RNNs), transformers or other language modelling techniques to encode features such as tone, descriptive elements, and contextual associations present in the text. In some embodiments, the input text can be tokenized and embedded into numerical representations, which can then be passed through successive layers of the text encoder model to generate the second feature vector.

In some embodiments, the system process can generate a query using both or a combination of the first feature vector and the second feature vector according to a predefined query template to generate the first set of images. As described above, the query template can define the structural layout and the encoding format for combining the first feature vector, and the second feature vector into a single composite query. The query template can specify the positional arrangements, relative weighting, or transformation methods for embedding each feature vector into the query template. The system process can embed the first feature vector and the second feature vector into the query template to generate a structured query which encodes information associated with the input image and the input text.

In some embodiments, the system process can execute the query using the ML model 208A to process the feature vectors from the structured query to generate multiple images depicting the entity. For example, assume that the input image provided by the user via the UI element 404 depicts the user's face in a neutral expression and the accompanying text input specifies an attribute such as "smile" or "smiling facial expression". Upon receiving these inputs, the system process can analyze the input image using the image encoder model to extract visual and contextual features generating a first feature vector that represents the user's facial structure, appearance, and the background context. Substantially simultaneously, the input text describing the attribute "smile" is processed using the text encoder model to generate a second feature vector that encodes the semantic meaning and contextual relevance of the expression "smile." The system process can then embed the first feature vector and the second feature vector into a pre-defined query template to generate a structured query preserving the positional and semantic relationship between the visual features of the user and the textual description of the desired facial expression. This structured query is then processed by the ML model 208A to generate a first set of images depicting the same user with the specified smiling expression, while maintaining consistency with the original visual characteristics of the user captured from the input image. The system process can then pass the first set of images 402 to the application 207A for display on the user device 110 via the UI, allowing the user to review and optionally select or further personalize the generated set of images 402.

In some embodiments, the UI of the application 207A can allow the user to browse through the set of images 402 to select an image from the set of images 402 for further interaction. Upon selection, the UI can display a set of attributes associated with the entity depicted in the selected image. If the entity is a human, the attributes may include, but are not limited to for example, facial expressions, hairstyles, clothing, head gear, facial hair, eye gear etc. The UI can further allow the user to select one or more attributes from the set of attributes, which the user may wish to modify. The one or more selected attributes can then be used as updated input to guide the generation of a second set of images reflecting the desired modifications. For example, if the user selects one or more attributes for modification, the application 207A can generate a request for modification for the system process. The request can include the selected image and an indication of the one or more selected attributes. The application 207A can then pass the request to the system process.

In some embodiments, the system process can process the selected image using the image encoder model to generate a third feature vector to represent the visual and contextual features of the selected image. In some embodiments, rather than processing the selected image using the image encoder model, the system process can generate a down-sampled version of the selected image. In such embodiments, the system process can generate the third feature vector associated with the selected image by processing the down sampled version of the selected image using the image encoder model.

In some embodiments, the system process can generate a second query using the third feature vector and the indication of one or more selected attributes according to a predefined query template. To generate the query, the system process can embed the third feature vector and the indication of one or more selected attributes into the query template to generate a structured query representing information associated with the selected image and the indication of the one or more selected attributes. In some embodiments, the system process can also generate the second query based on the first feature vector, the third feature vector and the indication of one or more selected attributes thereby allowing the ML model 208 to process the visual and contextual features of the original input image, the selected image and the one or more selected attributes.

In some embodiments, system process can generate multiple images depicting the entity having the modified one or more attributes by processing the second query using the ML model 208A. Continuing with the example described above, the user can select an image from the set of images 402 that depicts the user with the "smiling" facial expression and "a short straight hair." Upon selection, the UI displays a set of attributes associated with the user such as "facial expression," "hairstyle," "clothing," "headgear," "eyewear" and "facial hair." The user can select the attribute "hairstyle" and indicate a desired modification to "curly hair." In another example, if the selected image depicts a user wearing "sunglasses," the user can unselect the attribute "sunglasses" to generate a second set of images depicting the user without "sunglasses." In response, the application 207A can generate a request for modification and transmit the request to the system process. The system process can generate a third feature vector representing the visual and contextual features of the selected image by processing the selected image using the image encoder. Subsequently, the system process can generate a second query by embedding the third feature vector and an indication of the selected attribute into the query template. The structured query is then processed by the ML model 208A to generate a second set of images depicting the user with the modified hairstyle "curly hair," while preserving the relevant visual characteristics from the previously selected image. after generating the second set of images, the system process can provide the second set of images to the application 207 for display to the user via the UI.

When the application 207 displays the second set of images via the UI, the user can again select an image from the second set of images for further interaction. Upon selection, the UI can display a new or updated set of attributes associated with the entity depicted in the selected image. The user may once again select one or more attributes to modify. The system process can then process the newly selected image using the image encoder model to generate the updated feature vector and generate a new query incorporating the updated feature vector and the indication of the newly selected attributes. The system process can process the query using the ML model 208A to generate yet another set of images reflecting the additional modifications.

Practical uses of the generated images include social media, where multimedia content can dramatically boost the visibility and appeal of posts for instance a video or photo can draw more viewers, while interactive elements like poll or GIFs can engage them directly with the narrative. Practical uses can also include using the generated images for personal or professional messaging to convey information quickly and effectively. For example, a quick emoji or a sticker can replace a long sentence and deliver the emotion or reaction immediately. Practical uses can further include use of multimedia content in digital marketing where engaging content can lead to higher conversion rates as videos, interactive ads and timely GIFs can capture interest and help in storytelling more effectively than text.

The subject system can also be used as an educational tool to facilitate learning in areas such as visual storytelling, character design, digital art, or language comprehension. By enabling users to generate and modify images based on descriptive text inputs and visual attributes, the system promotes interactive engagement. The iterative modification of attributes further allow learners to experiment with visual elements and observe real-time outcomes, thereby supporting creative exploration and conceptual understanding in an educational context.

FIG. 5 is a flowchart illustrating an example process 500 for generating an output image. For explanatory purposes, the process 500 is primarily described herein with reference to the user device 110 and the server 120 of FIG. 1. However, the process 500 is not limited to the user device 110 and the server 120 of FIG. 1, and one or more blocks (or operations) of the process 500 may be performed by one or more other suitable devices. Further for explanatory purposes, the blocks of the process 500 are described herein as occurring in serial, or linearly. However, multiple blocks of the process 500 may occur in parallel. In addition, the blocks of the process 500 need not be performed in the order shown and/or one or more blocks of the process 500 need not be performed and/or can be replaced by other operations.

At block 502, the system process receives a first image and at least one of a second image or a text input, wherein the text input describes an output image. For example, the UI of the user device 110 is configured to allow users to select various types of inputs for generating an output image 302 through interaction with selectable UI elements. These UI elements - such as UI elements 304, 306 and 308 may each correspond to predefined images (e.g., emojis, avatars, etc.) In an example, the UI elements 304, 306 and 308 can be associated with a first image depicting a cactus, a second image depicting a bicycle and a third image depicting a forest, respectively. When the user selects one or more of these UI elements (e.g., UI elements 304 and 306), the corresponding images are identified as input sources, and the selection is reflected visually by the UI elements 304A and 306B. To further enhance personalization, the UI may also present UI elements for selecting additional input images such as images of individuals retrieved from the device's contacts application (e.g., UI element 310) or images locally stored in the device's gallery (e.g., UI element 312). Moreover, in some embodiments the UI may include a dedicated input field (e.g., UI element 304) that allows the user to enter text, which can be used as an additional conditioning parameter by the ML model to generate the output image 302.

At block 504, the system process generates the output image by processing the first image and the at least one of the second image or the text input using a machine learning (ML) model. For example, in response to selecting the input (e.g., the first image, the second image and the text), the system process can generate the output image by process the input using the ML model 208A. In some embodiments, the system process the input using the ML model 208A to can generate a down sampled version of the first image by processing the first image using an image processing model. The resulting down sampled image can retain the structure and visual characteristics of the original image but with a reduced resolution. Similarly, the system process can generate a down sampled version of the second image by processing the second image using the image processing model.

After generating the down sampled version of the first image, the system 200 can process the down sampled version of the first image using an image encoder to generate a first feature vector. Similarly, the system process can generate a second feature vector representing the visual and contextual features associated with the down sampled version of the second image (or the second image) by processing the down sampled version of the second image using the image encoder. The system process can generate a third feature vector that encodes one or more features associated with the semantic context of the text by processing the input text using a text encoder model.

In some embodiments, the system process can generate a textual description that characterizes the visual content of the first image by processing the first image (or the down sampled version of the first image.) After generating the textual description for the first image, the system can generate a fourth feature vector representing one or more features of the textual description associated with the first image. Simultaneously, the system process can generate a corresponding textual description that characterizes the visual content of the second image. The system process can further generate a fifth feature vector representing one or more features of the textual description of the second image.

In some embodiments, the system process can query a database associated with the data 206 of the user device 110 to retrieve one or more labels associated with the first image and the second image. The labels can include names, metadata or descriptive annotations associated to the first image and the second image and stored in the user device 110. After retrieving the one or more labels associated with the first image, the system process can generate a sixth feature vector representing one or more textual or contextual features indicated by the one or more labels by processing the one or more labels using the text encoder. Similarly, the system process can retrieve one or more labels associated with the second image and can process the one or more labels using the text encoder to generate a seventh feature vector representing one or more textual or contextual features indicated by the one or more labels associated with the second image.

In some embodiments, the system process can generate the query using all or a combination of the feature vectors described above. For example, the system process can embed all or a combination of the feature vectors into the query template to generate a structured query representing information associated with the first input image, the second input image, and the input text.

In some embodiments, the ML model 208A is configured to receive and process structured query generated using a combination of feature vectors - such as those derived from the images, text inputs, image captions, metadata, or associated labels. Upon receiving the structured query, the ML model 208A can process the feature vectors from the structured query to generate an output image 302 which reflects a combination of the visual and contextual features depicted in the first input image, the second input image and the input text.

At block 506, the system process provides the output image to the application for display. For example, the system process can render the output image through the UI. The output image may be displayed within the display region of the UI (e.g., as output image 302) allowing the user to view, save or further interact with the output image 302.

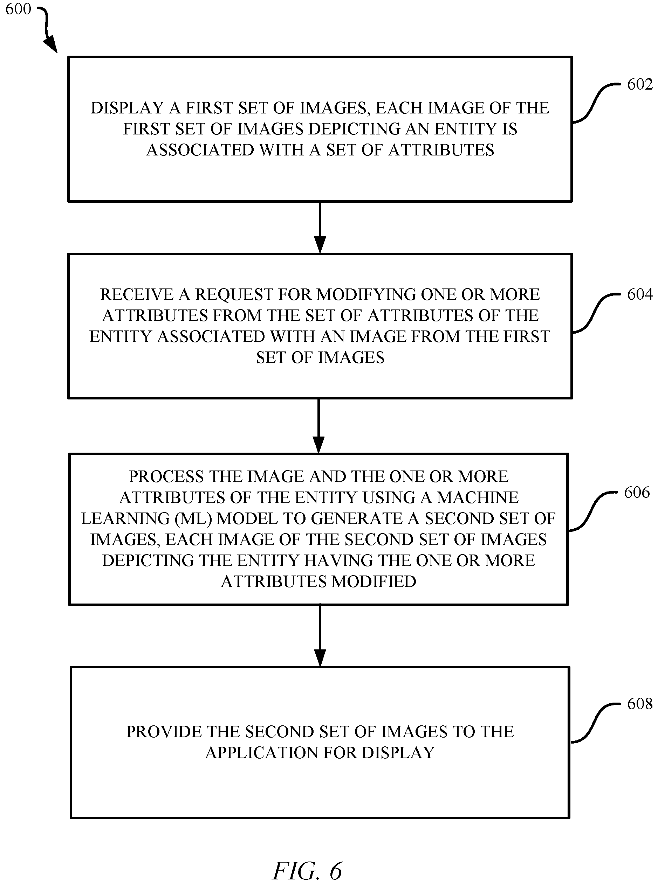

FIG. 6 is a flowchart illustrating an example process 600 for modifying one or more attributes of an entity depicted in the image. For explanatory purposes, the process 600 is primarily described herein with reference to the user device 110 and the server 120 of FIG. 1. However, the process 600 is not limited to the user device 110 and the server 120 of FIG. 1, and one or more blocks (or operations) of the process 600 may be performed by one or more other suitable devices. Further for explanatory purposes, the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations.

At block 602, an application 207A displays a first set of images, each image of the first set of images depicting an entity is associated with a set of attributes. For example, the UI of the user device 110 is configured to allow users to select various types of inputs for generating a first set of images 402 through interaction with selectable UI elements. These UI elements - such as UI elements 404, 406 and 408 may each correspond to predefined images (e.g., images of the user, emojis, avatar, etc.) In this example, the UI elements 404, 406 and 408 can be associated with a first image depicting the user, a second image depicting a hat and a third image depicting a forest, respectively. When the user selects one or more of these UI elements (e.g., UI element 404), the corresponding image is identified as input source. The system process of the user device 110 then uses the selected input to generate the first set of images 402. To further enhance personalization, the UI may also present UI elements for selecting additional input images such as images locally stored in the device's gallery (e.g., UI element 412). Moreover, in some embodiments the UI may include a dedicated input field (e.g., UI element 410) that allows the user to enter text, which can be used as an additional conditioning parameter by the ML model to generate the output image 402.

At block 604, the system process receives a request for modifying one or more attributes from the set of attributes of the entity associated with the selected image from the first set of images. For example, the user may select one or more attributes of the selected image for modification. In response to receiving the user input, the application 207 can generate a request for modifying the one or more attributes for the system process to generate the second set of images depicting the entity with modified one or more attributes. Subsequently, the application 207A can then transmit the request to the system process of the system 200.

At block 606, the system process can generate a second set of images, each image of the second set of images depicting the entity having the one or more attributes modified. For example, the system process can generate a third feature vector to represent the visual and contextual features of the selected image by processing the selected image using the image encoder. In some embodiments, rather than processing the selected image using the image encoder model, the system process can generate a down-sampled version of the selected image. In such embodiments, the system process can generate the third feature vector associated with the selected image by processing the down sampled version of the selected image using the image encoder model.

The system process can generate a second query using the third feature vector and an indication of one or more selected attributes according to a predefined query template. In some embodiments, the system process can also generate the second query based on the first feature vector and the third feature vector thereby allowing the ML model 208 to process the visual and contextual features of the input image, the selected image and the one or more selected attributes.

In some embodiments, system process can generate multiple images depicting the entity having the modified one or more attributes by processing the second query using the ML model 208A to process the feature vectors from the structured query. Continuing with the example described above, the user can select an image from the set of images 402 that depicts the user with the "smiling" facial expression and "a short straight hair." Upon selection, the UI displays a set of attributes associated with the user such as "facial expression," "hairstyle," "clothing" and "facial hair." The user can select the attribute "hairstyle" and indicate a desired modification to "curly hair." In another example, if the selected image depicts a user wearing "sunglasses," the user can unselect the attribute "sunglasses" to generate a second set of images depicting the user without "sunglasses." In response, the system process can generate a third feature vector representing the visual and contextual features of the selected image by processing the selected image using the image encoder model. Subsequently, the system process can generate a second query by embedding the third feature vector and an indication of the selected attribute into the query template. The structured query is then processed by the ML model 208A to generate a second set of images depicting the user with the modified hairstyle - curly hair - while preserving the relevant visual characteristics from the previously selected image.

At block 608, the system process can provide the second set of images to the application for display. For example, the UI can display a new or updated set of attributes associated with the entity depicted in the selected image. The user may once again select one or more attributes to modify. The system process can then process the newly selected image using the image encoder to generate the updated feature vector and generate a new query incorporating the updated feature vector and the indication of the newly selected attributes. The system process can then execute the query using the ML model 208A to generate yet another set of images reflecting the additional modifications.

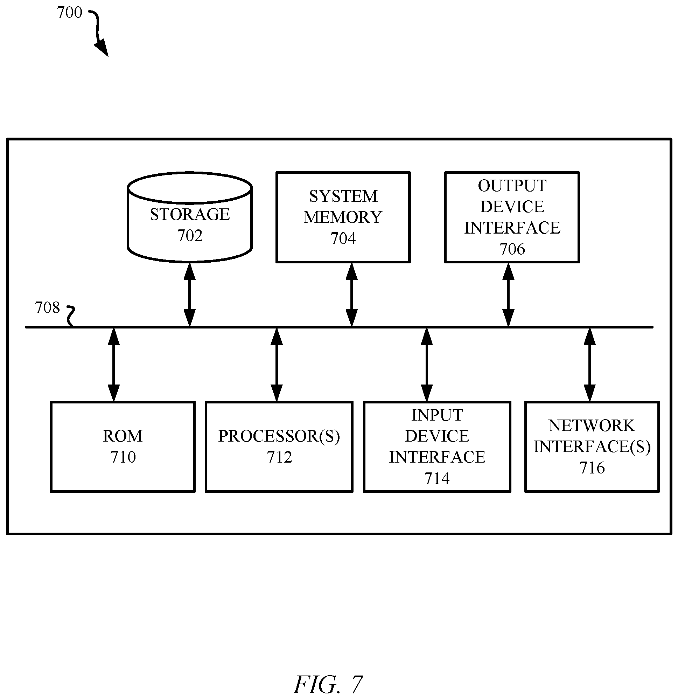

FIG. 7 illustrates an electronic system 700 with which one or more implementations of the subject technology may be implemented. The electronic system 700 can be, and/or can be a part of, server 120 and/or user device 110 shown in FIG. 1. The electronic system 700 may include various types of computer readable media and interfaces for various other types of computer readable media. The electronic system 700 includes a bus 708, one or more processing unit(s) 712, a system memory 704 (and/or buffer), a ROM 710, a permanent storage device 702, an input device interface 714, an output device interface 706, and one or more network interfaces 716, or subsets and variations thereof.

The bus 708 collectively represents all system, peripheral, and chipset buses that communicatively connect the numerous internal devices of the electronic system 700. In one or more implementations, the bus 708 communicatively connects the one or more processing unit(s) 712 with the ROM 710, the system memory 704, and the permanent storage device 702. From these various memory units, the one or more processing unit(s) 712 retrieves instructions to execute and data to process in order to execute the processes of the subject disclosure. The one or more processing unit(s) 712 can be a single processor or a multi-core processor in different implementations.

The ROM 710 stores static data and instructions that are needed by the one or more processing unit(s) 712 and other modules of the electronic system 700. The permanent storage device 702, on the other hand, may be a read-and-write memory device. The permanent storage device 702 may be a non-volatile memory unit that stores instructions and data even when the electronic system 700 is off. In one or more implementations, a mass-storage device (such as a magnetic or optical disk and its corresponding disk drive) may be used as the permanent storage device 702.

In one or more implementations, a removable storage device (such as a floppy disk, flash drive, and its corresponding disk drive) may be used as the permanent storage device 702. Like the permanent storage device 702, the system memory 704 may be a read-and-write memory device. However, unlike the permanent storage device 702, the system memory 704 may be a volatile read-and-write memory, such as random-access memory. The system memory 704 may store any of the instructions and data that one or more processing unit(s) 712 may need at runtime. In one or more implementations, the processes of the subject disclosure are stored in the system memory 704, the permanent storage device 702, and/or the ROM 710. From these various memory units, the one or more processing unit(s) 712 retrieves instructions to execute and data to process in order to execute the processes of one or more implementations.

The bus 708 also connects to the input and output device interfaces 714 and 706. The input device interface 714 enables a user to communicate information and select commands to the electronic system 700. Input devices that may be used with the input device interface 714 may include, for example, alphanumeric keyboards and pointing devices (also called "cursor control devices"). The output device interface 706 may enable, for example, the display of images generated by electronic system 700. Output devices that may be used with the output device interface 706 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 7, the bus 708 also couples the electronic system 700 to one or more networks and/or to one or more network nodes, such as the user device 110 or the server 120 shown in FIG. 1, through the one or more network interface(s) 716. In this manner, the electronic system 700 can be a part of a network of computers (such as a LAN, a wide area network ("WAN"), or an Intranet, or a network of networks, such as the Internet. Any or all components of the electronic system 700 can be used in conjunction with the subject disclosure.

Implementations within the scope of the present disclosure can be partially or entirely realized as computer program products comprising code in a tangible computer-readable storage medium (or multiple tangible computer-readable storage media of one or more types) encoding one or more instructions of the code. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or segmented in a different way) all without departing from the scope of the subject technology.

Aspects of the present technology may include the gathering and use of data available from specific and legitimate sources to train machine learning models and to apply to trained machine learning models deployed in systems. The present disclosure contemplates that in some instances, this gathered data may include personal information data that uniquely identifies or can be used to identify a specific person. Such personal information data can include meta-data or other data associated with images that may include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to train a machine learning model for better performance. Accordingly, use of such personal information data enables users to have greater control of the delivered content. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of training data collection, the present technology can be configured to allow users to select to "opt in" or "opt out" of participation in the collection of personal information data during registration for services or anytime thereafter. In another example, users can select not to provide mood-associated data for use as training data. In yet another example, users can select to limit the length of time mood-associated data is maintained or entirely block the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, training data can be selected based on aggregated non-personal information data or a bare minimum amount of personal information, such as the content being handled only on the user's device or other non-personal information available to as training data.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation, or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any embodiment described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Exemplary embodiments of the present disclosure are set out in the following items:
1. A computer-implemented method, comprising:
   receiving, by a system process and from an application, an input comprising a first image and at least one of a second image or a text input, wherein the text input describes an output image;
   processing, by the system process, the first image and the at least one of the second image or the text input using a machine learning (ML) model to generate the output image, the ML model having been trained to generate an image based on visual and contextual features of multiple images provided as input to the ML model; and
   responsive to receiving, by the system process, the input from the application, providing, by the system process, the output image to the application for display.
2. The computer-implemented method of item 1, wherein processing the first image and the at least one of the second image or the text input using the ML model comprises:
   processing the first image using an image encoder model to generate a first feature vector indicating visual and contextual features associated with the first image;
   processing the second image using an image encoder model to generate a second feature vector indicating visual and contextual features associated with the second image;
   processing the text input using a text encoder model to generate a third feature vector indicating one or more features associated with the text input;
   generating a query based in part on the first feature vector, the second feature vector and the third feature vector;
   providing the query to the ML model to generate the output image.
3. The computer-implemented method of item 2, wherein processing the first image and the at least one of the second image using the image encoder model comprises:
   processing the first image and the second image using an image processing model to generate a respective down-sampled version of the first image and the second image; and
   processing the respective down-sampled version of the first image and the second image to generate the first feature vector and the second feature vector.
4. The computer-implemented method of any one of items 2-3, wherein processing the first image and the at least one of the second image further comprises:
   processing the first image and the second image using an image captioning model to generate a respective textual description associated with the first image and the second image;
   processing the textual description associated with the first image to generate a fourth feature vector indicating one or more features of the textual description associated with the first image;
   processing the textual description associated with the second image to generate a fifth feature vector indicating one or more features of the textual description associated with the second image; and
   including the fourth feature vector and the fifth feature vector into the query, prior to providing the query to the ML model.
5. The computer-implemented method of any one of items 2-4, further comprises:
   obtaining a first label associated with the first image;
   processing the first label using the text encoder model to generate a sixth feature vector associated with the first label; and
   including the sixth feature vector into the query, prior to providing the query to the ML model.
6. The computer-implemented method of item 5, further comprises:
   obtaining a second label associated with the second image;
   processing the second label using the text encoder model to generate a seventh feature vector associated with the second label; and
   including the seventh feature vector into the query, prior to providing the query to the ML model.
7. The computer-implemented method of any one of items 5-6, wherein the ML model is a generative neural network model.
8. The computer-implemented method of item 7, wherein training the ML model comprises:
   generating a training dataset comprising a plurality of training samples, wherein each training sample comprises one or more training images, textual descriptions of the one or more training images and a target image; and
   training the ML model by processing the one or more training images and the textual descriptions of the one or more training images associated with each training sample to generate the target image associated with the respective training sample.
9. A non-transitory machine-readable medium comprising instructions that, when executed by one or more processors, cause the one or more processors to perform operations comprising:
   receiving, by a system process and from an application, an input comprising a first image and at least one of a second image or a text input, wherein the text input describes an output image;
   processing, by the system process, the first image and the at least one of the second image or the text input using a machine learning (ML) model to generate the output image, the ML model having been trained to generate an image based on visual and contextual features of multiple images provided as input to the ML model; and
   responsive to receiving, by the system process, the input from the application, providing, by the system process, the output image to the application for display.
10. The non-transitory machine-readable medium of item 9, wherein processing the first image and the at least one of the second image or the text input using the ML model comprises:
   processing the first image using an image encoder model to generate a first feature vector indicating visual and contextual features associated with the first image;
   processing the second image using an image encoder model to generate a second feature vector indicating visual and contextual features associated with the second image;
   processing the text input using a text encoder model to generate a third feature vector indicating one or more features associated with the text input;
   generating a query based in part on the first feature vector, the second feature vector and the third feature vector;
   providing the query to the ML model to generate the output image.
11. The non-transitory machine-readable medium of item 10, wherein processing the first image and the at least one of the second image using the image encoder model comprises:
   processing the first image and the second image using an image processing model to generate a respective down-sampled version of the first image and the second image; and
   processing the respective down-sampled version of the first image and the second image to generate the first feature vector and the second feature vector.
12. The non-transitory machine-readable medium of any one of items 10-11, wherein processing the first image and the at least one of the second image further comprises:
   processing the first image and the second image using an image captioning model to generate a respective textual description associated with the first image and the second image;
   processing the textual description associated with the first image to generate a fourth feature vector indicating one or more features of the textual description associated with the first image;
   processing the textual description associated with the second image to generate a fifth feature vector indicating one or more features of the textual description associated with the second image; and
   including the fourth feature vector and the fifth feature vector into the query, prior to providing the query to the ML model.
13. The non-transitory machine-readable medium of any one of items 10-12, further comprises:
   obtaining a first label associated with the first image;
   processing the first label using the text encoder model to generate a sixth feature vector associated with the first label; and
   including the sixth feature vector into the query, prior to providing the query to the ML model.
14. The non-transitory machine-readable medium of item 13, further comprises:
   obtaining a second label associated with the second image;
   processing the second label using the text encoder model to generate a seventh feature vector associated with the second label; and
   including the seventh feature vector into the query, prior to providing the query to the ML model.
15. The non-transitory machine-readable medium of any one of items 13-14, wherein the ML model is a generative neural network model.
16. The non-transitory machine-readable medium of item 15, wherein training the ML model comprises:
   generating a training dataset comprising a plurality of training samples, wherein each training sample comprises one or more training images, textual descriptions of the one or more training images and a target image; and
   training the ML model by processing the one or more training images and the textual descriptions of the one or more training images associated with each training sample to generate the target image associated with the respective training sample.
17. A device comprising:
   a memory; and
   at least one processor configured to:
      receive an input comprising a first image and at least one of a second image or a text input, wherein the text input describes an output image;
      process the first image and the at least one of the second image or the text input using a machine learning (ML) model to generate the output image, the ML model having been trained to generate an image based on visual and contextual features of multiple images provided as input to the ML model; and
      responsive to receiving the input, provide the output image for display.
18. The device of item 17, wherein the one or more processors are further configured to execute instructions to:
   process the first image using an image encoder model to generate a first feature vector indicating visual and contextual features associated with the first image;
   process the second image using an image encoder model to generate a second feature vector indicating visual and contextual features associated with the second image;
   process the text input using a text encoder model to generate a third feature vector indicating one or more features associated with the text input;
   generate a query based in part on the first feature vector, the second feature vector and the third feature vector;
   provide the query to the ML model to generate the output image.
19. The device of item 18, wherein the one or more processors are further configured to execute instructions to:
   process the first image and the second image using an image processing model to generate a respective down-sampled version of the first image and the second image; and
   process the respective down-sampled version of the first image and the second image to generate the first feature vector and the second feature vector.
20. The device of any one of items 18-19, wherein the one or more processors are further configured to execute instructions to:
   process the first image and the second image using an image captioning model to generate a respective textual description associated with the first image and the second image;
   process the textual description associated with the first image to generate a fourth feature vector indicating one or more features of the textual description associated with the first image;
   process the textual description associated with the second image to generate a fifth feature vector indicating one or more features of the textual description associated with the second image; and
   include the fourth feature vector and the fifth feature vector into the query, prior to providing the query to the ML model.

## Claims

1. A computer-implemented method, comprising:
receiving, by a system process and from an application, an input comprising a first image and at least one of a second image or a text input, wherein the text input describes an output image;
processing, by the system process, the first image and the at least one of the second image or the text input using a machine learning (ML) model to generate the output image, the ML model having been trained to generate an image based on visual and contextual features of multiple images provided as input to the ML model; and
responsive to receiving, by the system process, the input from the application, providing, by the system process, the output image to the application for display.

2. The computer-implemented method of claim 1, wherein processing the first image and the at least one of the second image or the text input using the ML model comprises:
processing the first image using an image encoder model to generate a first feature vector indicating visual and contextual features associated with the first image;
processing the second image using an image encoder model to generate a second feature vector indicating visual and contextual features associated with the second image;
processing the text input using a text encoder model to generate a third feature vector indicating one or more features associated with the text input;
generating a query based in part on the first feature vector, the second feature vector and the third feature vector;
providing the query to the ML model to generate the output image.

3. The computer-implemented method of claim 2, wherein processing the first image and the at least one of the second image using the image encoder model comprises:
processing the first image and the second image using an image processing model to generate a respective down-sampled version of the first image and the second image; and
processing the respective down-sampled version of the first image and the second image to generate the first feature vector and the second feature vector.

4. The computer-implemented method of any one of claims 2-3, wherein processing the first image and the at least one of the second image further comprises:
processing the first image and the second image using an image captioning model to generate a respective textual description associated with the first image and the second image;
processing the textual description associated with the first image to generate a fourth feature vector indicating one or more features of the textual description associated with the first image;
processing the textual description associated with the second image to generate a fifth feature vector indicating one or more features of the textual description associated with the second image; and
including the fourth feature vector and the fifth feature vector into the query, prior to providing the query to the ML model.

5. The computer-implemented method of any one of claims 2-4, further comprises:
obtaining a first label associated with the first image;
processing the first label using the text encoder model to generate a sixth feature vector associated with the first label; and
including the sixth feature vector into the query, prior to providing the query to the ML model.

6. The computer-implemented method of claim 5, further comprises:
obtaining a second label associated with the second image;
processing the second label using the text encoder model to generate a seventh feature vector associated with the second label; and
including the seventh feature vector into the query, prior to providing the query to the ML model.

7. The computer-implemented method of any one of claims 5-6, wherein the ML model is a generative neural network model.

8. The computer-implemented method of any one of claims 1-7, further comprising:
generating a training dataset comprising a plurality of training samples, wherein each training sample comprises one or more training images, textual descriptions of the one or more training images and a target image; and
training the ML model by processing the one or more training images and the textual descriptions of the one or more training images associated with each training sample to generate the target image associated with the respective training sample.

9. A non-transitory machine-readable medium comprising instructions that, when executed by one or more processors, cause the one or more processors to perform operations comprising:
receiving, by a system process and from an application, an input comprising a first image and at least one of a second image or a text input, wherein the text input describes an output image;
processing, by the system process, the first image and the at least one of the second image or the text input using a machine learning (ML) model to generate the output image, the ML model having been trained to generate an image based on visual and contextual features of multiple images provided as input to the ML model; and
responsive to receiving, by the system process, the input from the application, providing, by the system process, the output image to the application for display.

10. The non-transitory machine-readable medium of claim 9, wherein processing the first image and the at least one of the second image or the text input using the ML model comprises:
processing the first image using an image encoder model to generate a first feature vector indicating visual and contextual features associated with the first image;
processing the second image using an image encoder model to generate a second feature vector indicating visual and contextual features associated with the second image;
processing the text input using a text encoder model to generate a third feature vector indicating one or more features associated with the text input;
generating a query based in part on the first feature vector, the second feature vector and the third feature vector;
providing the query to the ML model to generate the output image.

11. The non-transitory machine-readable medium of claim 10, wherein processing the first image and the at least one of the second image using the image encoder model comprises:
processing the first image and the second image using an image processing model to generate a respective down-sampled version of the first image and the second image; and
processing the respective down-sampled version of the first image and the second image to generate the first feature vector and the second feature vector.

12. The non-transitory machine-readable medium of any one of claims 10-11, wherein processing the first image and the at least one of the second image further comprises:
processing the first image and the second image using an image captioning model to generate a respective textual description associated with the first image and the second image;
processing the textual description associated with the first image to generate a fourth feature vector indicating one or more features of the textual description associated with the first image;
processing the textual description associated with the second image to generate a fifth feature vector indicating one or more features of the textual description associated with the second image; and
including the fourth feature vector and the fifth feature vector into the query, prior to providing the query to the ML model.

13. The non-transitory machine-readable medium of any one of claims 10-12, further comprises:
obtaining a first label associated with the first image;
processing the first label using the text encoder model to generate a sixth feature vector associated with the first label; and
including the sixth feature vector into the query, prior to providing the query to the ML model.

14. The non-transitory machine-readable medium of claim 13, further comprises:
obtaining a second label associated with the second image;
processing the second label using the text encoder model to generate a seventh feature vector associated with the second label; and
including the seventh feature vector into the query, prior to providing the query to the ML model.

15. A device comprising:
a memory; and
at least one processor configured to perform the method of any one of claims 1-8.
